# EUROPEAN PATENT APPLICATION

(11) **EP 1 536 418 A2**
(43) Date of publication of application: **01.06.2005**
(21) Application number: 04027550.5
(22) Date of filing: 19.11.2004
(51) Int. Cl.: G11B 7/125, G11B 7/135

(54) **Optical pickup**

(30) Priority: 27.11.2003 JP 2003397128
(71) Applicant: Pioneer Corporation, Meguro-ku, Tokyo (JP)
(72) Inventor: Sato, Makoto, Tsurugashima-shi Saitama 350-2288 (JP); Ogasawara, Masakazu, Tsurugashima-shi Saitama 350-2288 (JP); Kikuchi, Ikuya, Tsurugashima-shi Saitama 350-2288 (JP); Koike, Katsuhiro, Tsurugashima-shi Saitama 350-2288 (JP)
(74) Representative: Manitz, Finsterwald & Partner GbR

(57) **Abstract**

When recording/reading information data onto/from a recording medium (2) by irradiating the recording medium (2) with a first light beam, correction for decreasing the amount of spherical aberration is made just before the recording or reading. On the other hand, when recording/reading information data onto/from a recording medium by irradiating the recording medium with a second light beam, focus correction for correctly condensing the reflected light from the recording medium on the light receiving surface of a photodetector is made just before the recording or reading.

## Description

### BACKGROUND OF THE INVENTION

### 1.Field of the Invention

This invention relates to an optical pickup for recording/reading information data onto/from a recording medium.

### 2.Description of the Related Art

At present various optical discs such as a CD, a DVD, and a Blu-ray disc (registered trademark) are commercialized as optical recording media for recording such information data as audio, video, and computer data. Information recording/reproducing apparatus capable of recording/reproducing information data onto/from all types of optical discs which have different recording densities are also put on the market. Generally, such an information recording/reproducing apparatus includes an optical pickup, and a plurality of light sources are mounted on the optical pickup. The light sources generate read (or write) light beams having wavelengths corresponding to the respective types of the optical discs, and the number of light sources are the same as the number of types of the optical disc.

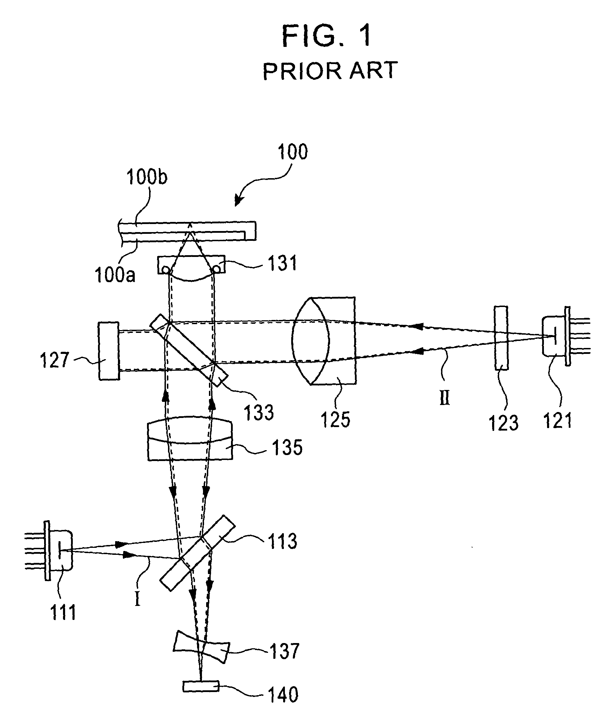

Fig. 1 of the attached drawings shows an example of the internal structure of the above-described optical pickup. (For example, see Japanese Patent Kokai No.2000-298871.)

In Fig. 1, a first light source 111 generates a first light I having a wavelength of approximately 650nm which is used for reading information from a DVD. The first light I is directed to an objective lens 131 via an optical path of a beam splitter 113, a collimator lens 135, and a beam splitter 133. A second light source 121 generates a second light II having a wavelength of approximately 780nm which is used for recording/reading information data onto/from a recording medium such as a CD or a CD-RW. The second light II is guided to the objective lens 131 via an optical path of a beam splitter 123, a collimator lens 125, and the beam splitter 133. The objective lens 131 condenses the first light I or the second light II supplied via the optical path, and irradiates a recording surface of an optical disc 100 with this light. The reflection light from the optical disc 100 is guided to a light receiving lens 137 which functions as an astigmatic element via an optical path of the objective lens 131, the beam splitter 133, the collimator lens 135, and the beam splitter 113. The light receiving lens 137 gives astigmatism to the reflected light from the optical disc 100, and irradiates a light receiving surface of a photodetector 140 with this light. The photodetector 140 outputs as a read signal an electric signal obtained by applying photoelectric conversion to the received light. In other words, the reflection light from the optical disc 100 of the first light I generated by the first light source 111 and the reflection light from the optical disc 100 of the second light II generated by the second light source 121 are both converted into read signals by the single photodetector 140.

In assembling an optical pickup which has a plurality of light sources sharing a single photodetector, first, the light receiving lens 137 and the photodetector 140 are placed at appropriate positions such that a beam spot made by the reflected light from the optical disc 100 of the first light I correctly falls on the light receiving surface of the photodetector 140. Next, the second light source 121 is placed at an appropriate position such that a beam spot made by the reflected light from the optical disc 100 of the second light II correctly falls on the light receiving surface of the photodetector 140.

In order to decide the position of the second light source 121, the second light source 121 itself needs to be moved not only in the direction of the optical axis, but also in the X-axis and the Y-axis directions on the plane perpendicular to the optical axis, i.e., in total three axis directions. Furthermore, spherical aberration caused by the objective lens and optical disc should be considered when placing various optical components mentioned above. This makes the fabrication difficult.

### SUMMARY OF THE INVENTION

One object of the present invention is to provide an optical pickup which is easy to fabricate.

According to one embodiment of the present invention, there is provided an improved optical pickup for recording/reading information data onto/from an optical recording medium. The optical pickup includes a photodetector for obtaining a read signal by applying photoelectric conversion to a light beam incident on a light receiving surface of the photodetector. The optical pickup also includes a first light source for generating a first light beam, and a second light source for generating a second light beam which has a wavelength different from that of the first light beam. The optical pickup also includes a first optical path for directing the first light beam to the recording medium, condensing the reflected light from the recording medium, and guiding the reflected light to the light receiving surface of the photodetector. The optical pickup also includes a second optical path for guiding the second light beam to the recording medium. The optical pickup also includes an optical system correction module provided on the first optical path for making spherical aberration correction when the first light beam is guided to the recording medium, and for making focus correction in condensing the reflected light from the recording medium on the light receiving surface of the photodetector when the second light beam is guided to the recording medium.

According to another embodiment of the present invention, there is provided another optical pickup for recording/reading information data onto/from an optical recording medium. The optical pickup includes a photodetector for obtaining a read signal by applying photoelectric conversion to a light incident on a light receiving surface of the photodetector. The optical pickup also includes a first light source for generating a first light beam, a second light source for generating a second light beam which has a wavelength different from that of the first light beam, and a third light source for generating a third light beam which has a wavelength different from those of the first light beam and the second light beam. The optical pickup also includes a first optical path for directing the first light beam to the recording medium, condensing the reflected light from the recording medium, and guiding the reflected light to the light receiving surface of the photodetector. The optical pickup also includes a second optical path for guiding the second light beam to the recording medium. The optical pickup also includes a third optical path for guiding the third light beam to the recording medium. The optical pickup also includes an optical system correction module provided in the first optical path for making spherical aberration correction when the first light beam is guided to the recording medium, and for making focus correction in condensing the reflected light from the recording medium on the light receiving surface of the photodetector when the second or third light beam is guided to the recording medium.

According to still another embodiment of the present invention, there is provided an information recording/reproducing apparatus for recording/reproducing information data onto/from an optical recording medium. The apparatus includes an optical pickup, and the optical pickup includes a photodetector for obtaining a read signal by applying photoelectric conversion to a light beam incident on the light receiving surface of the photodetector. The optical pickup also includes a first light source for generating a first light beam, and a second light source for generating a second light beam which has a wavelength different from that of the first light beam. The optical pickup also includes a first optical path for directing the first light beam to the recording medium, condensing the reflected light from the recording medium, and guiding the reflected light to the light receiving surface of the photodetector. The optical pickup also includes a second optical path for guiding the second light beam to the recording medium. The optical pickup also includes an optical system correction module provided in the first optical path for making spherical aberration correction when the first light beam is guided to the recording medium, and for making focus correction in condensing the reflected light from the recording medium on the light receiving surface of the photodetector when the second light beam is guided to the recording medium.

According to yet another embodiment of the present invention, there is provided another information recording/reproducing apparatus for recording/reproducing information data onto/from an optical recording medium. The apparatus includes an optical pickup, and the optical pickup includes a photodetector for obtaining a read signal by applying photoelectric conversion to the light beam incident on a light receiving surface of the photodetector. The optical pickup also includes a first light source for generating a first light beam, a second light source for generating a second light beam which has a wavelength different from that of the first light beam, and a third light source for generating a third light beam which has a wavelength different from those of the first light beam and the second light beam. The optical pickup also includes a first optical path for guiding the first light beam to the recording medium, condensing the reflected light from the recording medium, and guiding the reflected light to the light receiving surface of the photodetector, a second optical path for guiding the second light beam to the recording medium, and a third optical path for guiding the third light beam to the recording medium. The optical pickup also includes an optical system correction module provided in the first optical path for making spherical aberration correction when the first light beam is guided to the recording medium, and for making focus correction in condensing the reflected light from the recording medium on the light receiving surface of the photodetector when the second or third light beam is guided to the recording medium.

### BRIEF DESCRIPTION OF THE DRAWINGS

Fig. 1 illustrates a configuration of an optical pickup having a plurality of light sources.
Fig. 2 is a schematic block diagram showing an information recording/reproducing apparatus on which a pickup having a plurality of light sources is mounted.
Fig. 3 is a flowchart of an optical system correction subroutine performed by a controller.
Fig. 4 is a block diagram showing a modification of the optical pickup shown in Fig. 2.
Fig. 5 is a block diagram showing a modification of the optical pickup shown in Fig. 4.
Fig. 6 is a block diagram showing an information recording/reproducing apparatus equipped with an optical pickup that adopts an expander lens as an optical element for optical system correction.
Fig. 7 is a block diagram showing an information recording/reproducing apparatus equipped with a pickup having three light sources.
Fig 8 illustrates a flowchart of an optical system correction subroutine performed by a controller shown in Fig. 7.
Fig. 9 illustrates a block diagram of an information recording/reproducing apparatus equipped with an optical pickup that adopts a liquid crystal lens as an optical system correction element.

### DETAILED DESCRIPTION OF THE INVENTION

### First Embodiment

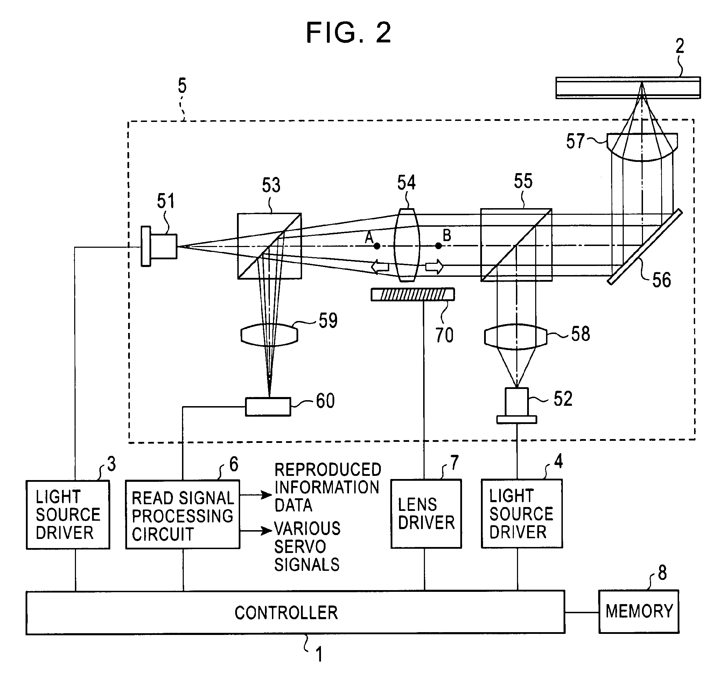

Referring to Fig. 2, an information recording/reproducing apparatus capable of recording/reproducing information data onto/from both a DVD (Digital Versatile Disc) and a Blu-ray Disc will be described.

In Fig.2, when an optical disc 2 onto/from which information data is to be recorded/reproduced is a DVD, a controller 1 supplies a recording start signal or a reading start signal to a light source driver 4. On the other hand, when the optical disc 2 is a Blu-ray disc, the controller 1 supplies a recording start signal or a reading start signal to another light source driver 3.

The light source driver 3 supplies a drive voltage (or a drive current) for recording information onto a Blu-ray disc to a first light source 51 mounted on an optical pickup 5 when the driver 3 receives a recording start signal. When the light source driver 3 receives the reading start signal, the light source driver 3 supplies a drive voltage (or a drive current) to the first light source 51 to read information from a Blu-ray disc. The light source driver 4 supplies a drive voltage (or a drive current) for recording information onto a DVD to a second light source 52 mounted on the optical pickup 5 when the driver 4 receives a recording start signal. When the light source driver 4 receives a reading start signal, the light source driver 4 supplies a drive voltage (or a drive current) for reading information from a DVD to the second light source 52.

The first light source 51 generates a light beam having a wavelength of 405nm which has optical power corresponding to the drive voltage (or the drive current) supplied from the light source driver 3. The light beam is guided to a collimator lens 54 via a beam splitter 53. The collimator lens 54 converts the supplied light beam into a parallel light. The collimator lens 54 is movable in the direction of the optical axis by an actuator 70. The parallel light obtained via the collimator lens 54 is guided to an objective lens 57 via a beam splitter 55 and a mirror 56.

The second light source 52 generates a light beam having a wavelength of 650nm which has optical power corresponding to the drive voltage (or the drive current) supplied from the light source driver 4. The light beam is converted into a parallel light by a collimator lens 58, and is guided to the objective lens 57 via the beam splitter 55 and the mirror 56.

The objective lens 57 condenses the parallel light supplied via the mirror 56, and supplies this light to the recording surface of the optical disc 2. The light-detecting surface of a photodetector 60 is irradiated with the reflected light from the recording surface of the optical disc 2 which passes through an optical path of the mirror 56, the beam splitter 55, the collimator lens 54, the beam splitter 53, and a detecting lens 59. The photodetector 60 supplies the electric signal obtained by applying photoelectric conversion to the light incident on the light detecting surface of the photodetector 60 to a read signal processing circuit 6 as a read signal.

The read signal processing circuit 6 generates various servo signals such as a focus servo signal, a tracking servo signal, and a slider servo signal based on the read signal. A focus actuator (not shown in the figure) moves the objective lens 57 in the direction perpendicular to the recording surface of the optical disc 2 in response to the focus servo signal. A tracking actuator (not shown in the figure) moves the objective lens 57 in the radial direction of the optical disc 2 in response to the tracking servo signal. A slider mechanism (not shown in the figure) moves the optical pickup 5 in the radial direction of the optical disc in response to the slider servo signal. The read signal processing circuit 6 reproduces the information data stored in the optical disc 2 based on a read sample value obtained by sampling the read signal, and outputs this as reproduced information data. Furthermore, the read signal processing circuit 6 supplies the read sample value to the controller 1. In a memory 8, optimum position information OP which shows an optimum position of the collimator lens 54 on the optical axis when the type of the optical disc 2 is a DVD is stored in advance. In other words, the optimum position information OP shows a position where the reflected light from the optical disc 2 in response to the light beam emitted by the second light source 52 can be correctly condensed on the light receiving surface of the photodetector 60 when the collimator lens 54 is set at a position on the optical axis indicated by the optimum position information OP. The memory 8 has a storage area for storing an amplitude of a read sample value together with a position of the collimator lens 54 at that point in time (referred to as "current position" of the collimator lens 54) when performing a spherical aberration correction subroutine (will be described).

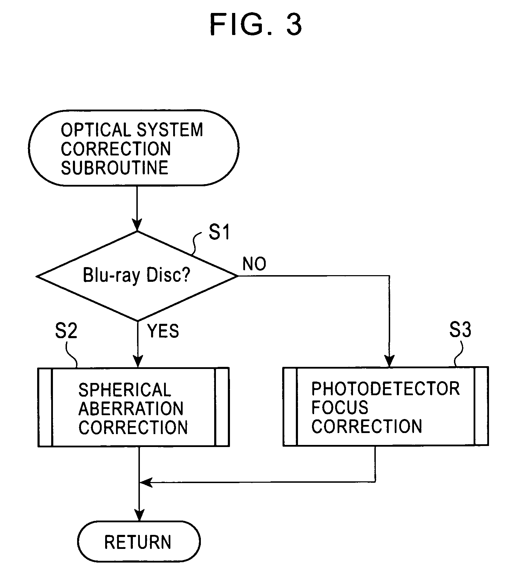

The controller 1 makes an adjustment to the optical pickup 5 according to an optical system correction subroutine as shown in Fig. 3 just before starting the recording or reproducing operation to the optical disc 2.

First, the controller 1 determines whether the optical disc 2 onto/from which information data is to be recorded/reproduced is a Blu-ray disc or not (step S1). When it is determined in the step S1 that the optical disc 2 is a Blu-ray disc, the controller 1 goes on to perform a spherical aberration correction subroutine (step S2).

In the spherical aberration correction subroutine, the controller 1 first supplies a lens movement command to a lens driver 7. The lens driver 7 supplies to the actuator 70 a drive voltage (or a drive current) for gradually moving the collimator lens 54 from a position A to a position B on the optical axis as shown in Fig.2 in response to the lens movement command. The actuator 70 gradually moves the collimator lens 54 in the direction of the optical axis from the position A to the position B as shown in Fig. 2 in response to the drive voltage. While the collimator lens 54 is moving, the controller 1 repeatedly reads a read sample value from the read signal processing circuit 6, relates position information indicating the current position of the collimator lens 54 on the optical axis (a position between the position A and the position B) to an amplitude value of the current read sample value, and sequentially stores the amplitude values and the position information in the memory 8. When the collimator lens 54 reaches the position B, the controller 1 retrieves the maximum value out of the amplitude values stored in the memory 8. Then, the controller 1 reads the stored position information together with the amplitude value from the memory 8, and supplies to the lens driver 7 a lens position set signal for setting the collimator lens 54 at the position indicated by the position information. This makes the actuator 70 move the collimator lens 54 to the position corresponding to the lens position set signal, and fix the collimator lens 54 at the position.

In other words, in the spherical aberration correction subroutine, first, the amount of spherical aberration is gradually changed by moving the collimator lens 54 in the direction of the optical axis from the position A to the position B. Here, the position of the collimator lens 54 when an amplitude value of the read signal is at the maximum is considered as being the position where the amount of spherical aberration is at the minimum, and the collimator lens 54 is fixed at this position. In short, spherical aberration is corrected by moving the collimator lens 54 in the optical axis direction. The collimator lens 54 is used in both a go-route of the optical path of a light beam emitted by the first light source 51 and guided to the optical disc 2, and a return-route of the optical path of a reflected light reflected from the optical disc 2 and guided to the photodetector 60. Therefore, even though the collimator lens 54 is moved in the direction of the optical axis for the sake of spherical aberration correction as described above, the beam spot of the reflected light from the optical disc 2 can correctly be formed on the light receiving surface of the photodetector 60.

On the other hand, when it is determined in the step S1 shown in Fig. 3 that the optical disc 2 is not a Blu-ray disc, the controller 1 determines that this optical disc 2 is a DVD, and goes on to perform a photodetector focus correction subroutine (step S3).

In the photodetector focus correction subroutine, the controller 1 first reads optimum position information OP from the memory 8, and supplies to the lens driver 7 a lens position set signal for setting the collimator lens 54 at a position on the optical axis indicated by the optimum position information OP. This causes the actuator 70 to move the collimator lens 54 to the position corresponding to the lens position set signal, and fix the collimator lens 54 at this position.

In other words, when the type of the optical disc 2 is a DVD, the collimator lens 54 is moved to the position on the optical axis indicated by the predetermined optimum position information OP so that the reflected light from the optical disc 2 in response to a light beam emitted by the second light source 52 can be correctly collected on the light receiving surface of the photodetector 60.

After executing the step S2 or S3, the controller 1 exits the optical system correction subroutine of Fig.3, and goes on to control the recording and reproducing operations to the information data (not shown in the figure).

As described above, in the information recorded/reproducing apparatus shown in Fig. 2, an optical system adjustment is made to the optical pickup 5 corresponding to the type of the optical disc 2 by moving the collimator lens 54 just before the recording/reproducing of the information data. Specifically, when the optical disc 2 is a Blu-ray disc, spherical aberration correction is automatically made by moving the collimator lens 54. This eliminates the need for placing optical parts at precise positions determined in consideration of spherical aberration in assembling the optical pickup 5. On the other hand, when the optical disc 2 is a DVD, focus correction for correctly condensing a beam spot of the reflected light from the optical disc 2 on the light receiving surface of the photodetector 60 is automatically made by moving the collimator lens 54. This eliminates the need for precisely positioning the second light source 52 in the direction of the optical axis in assembling the optical pickup 5, and makes the fabrication easier by just as much.

### Second Embodiment

In the above-described embodiment the collimator lens 54 is a single lens. However, the collimator lens may include a plurality of lenses.

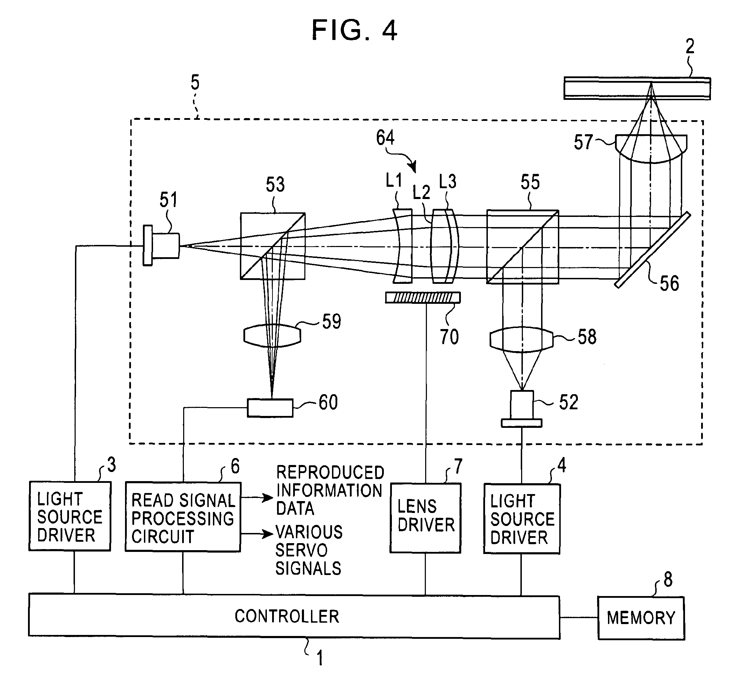

Fig. 4 illustrates an information recording/reproducing apparatus having an optical pickup according to another embodiment of the present invention conceived in view of this point.

The information recording/reproducing apparatus shown in Fig. 4 is the same as that shown in Fig. 2 except for a collimator lens 64.

The collimator lens 64 shown in Fig. 4 includes a cemented lens of a convex lens L2 and a meniscus lens L3, and a plane-concave lens L1. The actuator 70 moves the whole collimator lens 64 in the direction of the optical axis in the same manner as the actuator 70 moves the collimator lens 54 as described above. It should be noted that the actuator 70 may be designed to move only the plane-concave lens L1 of the collimator lens 64, or only the cemented lens of the convex lens L2 and the meniscus lens L3 in the direction of the optical axis in the same manner as it moves the collimator lens 54.

### Third Embodiment

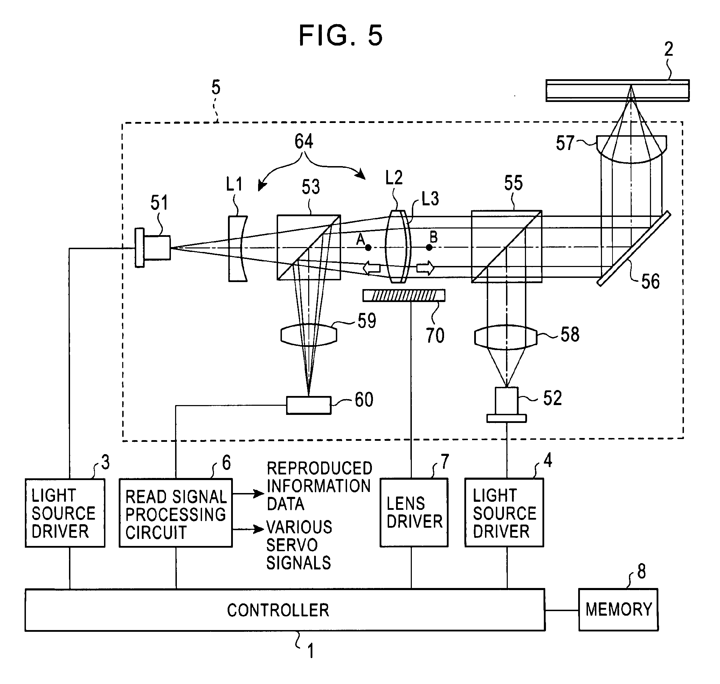

The present invention may be modified to separate the plane-concave lens L1 from the collimator lens 64, and have it disposed on the optical axis between the first light source 51 and the beam splitter 53, as shown in Fig. 5. According to the configuration shown in Fig. 5, the reflected light (from the optical disc 2) of a light beam emitted by the second light source 52 is guided to the photodetector 60 only via the convex lens L2 and the meniscus lens L3 of the collimator lens 64. The actuator 70 moves the cemented lens including the convex lens L2 and the meniscus lens L3 in the direction of the optical axis in the same manner as it moves the collimator lens 54 as described above.

### Fourth Embodiment

In the above-described configuration, spherical aberration correction and focus correction are made by moving the collimator lens 54 (or the collimator lens 64) provided between the beam splitters 53 and 55. However, an expander lens may be used in stead of the collimator lens.

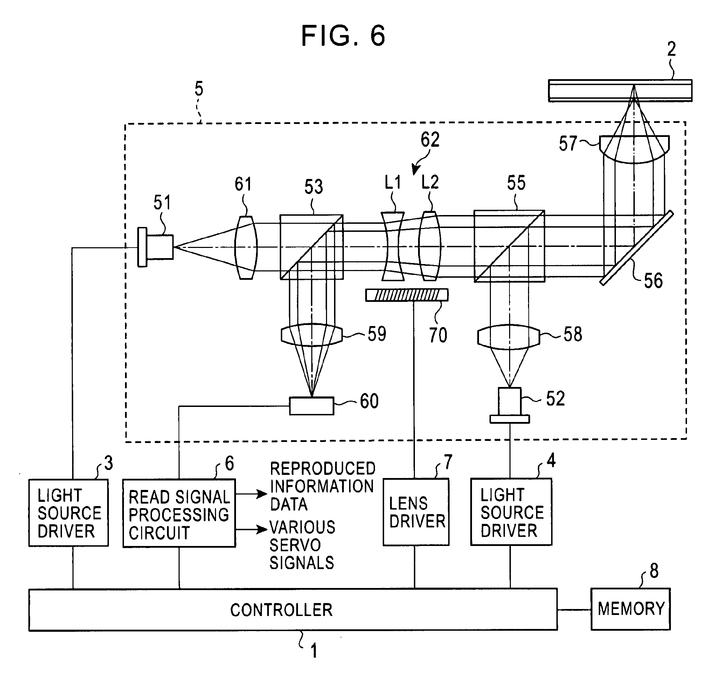

Fig. 6 illustrates an information recording/reproducing apparatus (or the pickup) having the expander lens.

In the information recording/reproducing apparatus shown in Fig. 6, the configuration is the same as that shown in Fig. 2 except for a collimator lens 61 and an expander lens 62.

In Fig. 6 the collimator lens 61 converts a light beam emitted by the first light source 51 into a parallel light. The parallel light is directed to the expander lens 62 via the beam splitter 53. The expander lens 62 includes a double-concave lens L1 and a convex lens L2 which are disposed with a predetermined distance from each other. The expander lens 62 magnifies the beam spot diameter of the parallel light supplied via the beam splitter 53. The parallel light whose spot diameter has been magnified by the expander lens 62 is guided to the objective lens 57 via the beam splitter 55 and the mirror 56. The objective lens 57 condenses the parallel light supplied via the mirror 56, and irradiates the recording surface of an optical disc 2 with this light. The reflected light from the recording surface of the optical disc 2 is guided to the expander lens 62 via the mirror 56 and the beam splitter 55. The expander lens 62 reduces the beam spot diameter of the reflected light supplied via the beam splitter 55. The reflected light whose spot diameter has been reduced by the expander lens 62 impinges on the light detecting surface of the photodetector 60 via an optical path of the beam splitter 53 and a detecting lens 59. The photodetector 60 supplies to the read signal processing circuit 6 an electric signal obtained by applying photoelectric conversion to the light incident on the light detecting surface of the photodetector 60 as a read signal. The read signal processing circuit 6 generates various servo signals such as a focus servo signal, a tracking servo signal, and a slider servo signal based on the read signal. The read signal processing circuit 6 reproduces information data stored in the optical disc 2 based on a read sample value obtained by sampling the read signal, and outputs this as reproduced information data. Further, the read signal processing circuit 6 supplies the read sample value to the controller 1. In the memory 8, optimum position information OP which indicates an optimum position of the expander lens 62 on the optical axis when the type of the optical disc 2 is a DVD is stored in advance. The memory 8 has a storage area for storing an amplitude of a read sample value together with a current position of the expander lens 62 at the time of performing a spherical aberration correction subroutine (will be described).

In the same manner as in the first embodiment (Fig. 2), the controller 1 shown in Fig. 6 makes an optical system adjustment to the optical pickup 5 according to the optical system correction subroutine as shown in Fig. 3 just before starting the recording and reproducing operation to the optical disc 2. In the spherical aberration correction subroutine of the step S2, the controller 1 first supplies a lens distance extension command to the lens driver 7. The lens driver 7 supplies to the actuator 70 a drive voltage (or a drive current) for gradually extending the distance between the double-concave lens L1 and the convex lens L2 within the expander lens 62 in response to the lens distance extension command. In response to the drive voltage, the actuator 70 gradually moves the concave lens L1 (or the convex lens L2, or both of the concave lens L1 and the convex lens L2) in the direction of the optical axis in such a manner that the distance between the concave lens L1 and the convex lens L2 within the expander lens 62 becomes longer. While the lens is moving, the controller 1 repeatedly reads a read sample value from the read signal processing circuit 6, relates position information indicating the current position of each of the concave lens L1 and the convex lens L2 on the optical axis to an amplitude value of the current read sample value, and sequentially stores the amplitude values and the position information in the memory 8. The controller 1 retrieves the maximum value out of the amplitude values stored in the memory 8, and reads the stored position information together with the amplitude value from the memory 8. Then, the controller 1 supplies a lens position set signal for setting the concave lens L1 and the convex lens L2 within the expander lens 62 at positions indicated by the position information.

In other words, in the spherical aberration correction subroutine, first, the amount of spherical aberration is gradually changed by extending the distance between the concave lens L1 and the convex lens L2 of the expander lens 62 more than the predetermined distance. The position of each of the concave lens L1 and the convex lens L2 when an amplitude value of the read signal is at the maximum is judged as being the position where the amount of spherical aberration is at the minimum, and the concave lens L1 and the convex lens L2 are fixed at these positions. In short, spherical aberration is corrected by adjusting the distance between the concave lens L1 and the convex lens L2 of the expander lens 62.

In the photodetector focus correction subroutine of the step S3 (Fig. 3), the controller 1 first reads the optimum position information OP from the memory 8, and supplies to the lens driver 7 a lens position set signal for setting the expander lens 62 at the position on the optical axis indicated by the optimum position information OP. This makes the actuator 70 move the expander lens 62 to the position corresponding to the lens position set signal, and fix the expander lens 62 at this position. In other words, when the optical disc 2 is a DVD, the expander lens 62 is moved to the position on the optical axis indicated by the optimum position information OP so that the reflected light of a light beam emitted by the second light source 52 can be correctly condensed on the light receiving surface of the photodetector 60.

### Fifth Embodiment

In the above-described embodiments an optical pickup having two light sources 51, 52 for a DVD and a Blu-ray disc is described. The present invention can also be applied to an optical pickup having three light sources for a CD, a DVD, and a Blu-ray disc.

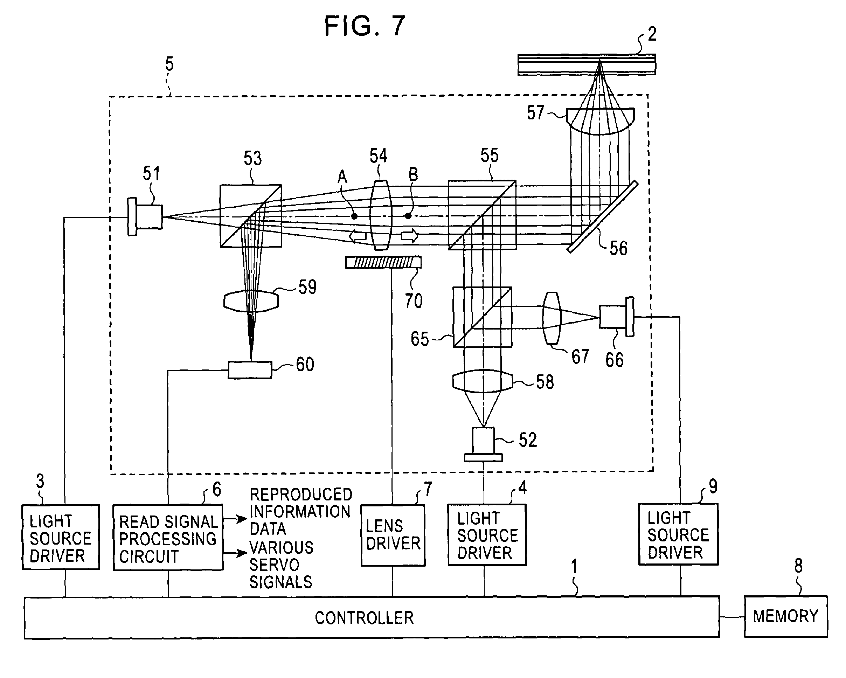

Fig. 7 is a block diagram showing a configuration of an information recording/reproducing apparatus which is capable of recording/reproducing information data onto/from any of a CD, a DVD, or a Blue-ray disc.

In Fig. 7, when the optical disc 2 is a DVD, the controller 1 supplies a recording start signal or a reading start signal to the light source driver 4. When the optical disc 2 is a Blu-ray disc, the controller 1 supplies a recording start signal or a reading start signal to the light source driver 3. When the optical disc 2 is a CD, the controller 1 supplies a recording start signal or a reading start signal to a light source driver 9.

The light source driver 3 supplies a drive voltage (or a drive current) for recording information onto a Blu-ray disc to the first light source 51 mounted on the optical pickup 5 when the driver 3 receives a recording start signal. When the light source driver 3 receives a reading start signal, the light source driver 3 supplies a drive voltage (or a drive current) for reading information from a Blu-ray disc to the first light source 51. The light source driver 4 supplies a drive voltage (or a drive current) for recording information onto a DVD disc to the second light source 52 mounted on the optical pickup 5 when the driver 4 receives a recording start signal. When the light source driver 4 receives a reading start signal, the light source driver 4 supplies a drive voltage (or a drive current) for reading information from a DVD to the second light source 52. The light source driver 9 supplies a drive voltage (or a drive current) for recording information onto a CD to a third light source 66 mounted on the optical pickup 5 when the driver 9 receives a recording start signal. When the light source driver 9 receives a reading start signal, the light source driver 9 supplies a drive voltage (or a drive current) for reading information from a CD to the third light source 66.

The first light source 51 generates a light beam having a wavelength of 405nm which has optical power corresponding to a drive voltage (or a drive current) supplied from the light source driver 3. The light beam is directed to the collimator lens 54 via the beam splitter 53. The collimator lens 54 converts the supplied light beam into a parallel light. The collimator lens 54 is movable in the direction of the optical axis by the actuator 70. The parallel light obtained via the collimator lens 54 is directed to the objective lens 57 via the beam splitter 55 and the mirror 56.

The second light source 52 generates a light beam having a wavelength of 650nm which has optical power corresponding to a drive voltage (or a drive current) supplied from the light source driver 4. The light beam is converted into a parallel light by the collimator lens 58, and is directed to the objective lens 57 via a beam splitter 65, the beam splitter 55, and the mirror 56.

The third light source 66 generates a light beam having a wavelength of 780nm which has optical power corresponding to a drive voltage (or a drive current) supplied from the light source driver 4. The light beam is converted into a parallel light by a collimator lens 67, and is directed to the objective lens 57 via the beam splitters 65, 55 and the mirror 56.

The objective lens 57 condenses the parallel light supplied via the mirror 56, and irradiates the recording surface of the optical disc 2 with this light. The light-detecting surface of the photodetector 60 is irradiated with the reflected light from the recording surface of the optical disc 2 which has passed through an optical path of the mirror 56, the beam splitter 55, the collimator lens 54, the beam splitter 53, and the detecting lens 59. The photodetector 60 supplies the electric signal obtained by applying photoelectric conversion to the light incident on the light detecting surface of the photodetector 60 to the read signal processing circuit 6 as a read signal. The read signal processing circuit 6 generates various servo signals such as a focus servo signal, a tracking servo signal, and a slider servo signal based on the read signal. A focus actuator (not shown in the figure) moves the objective lens 57 in the direction perpendicular to the recording surface of the optical disc 2 in response to the focus servo signal. A tracking actuator (not shown in the figure) moves the objective lens 57 in the radial direction of the optical disc 2 in response to the tracking servo signal. Slider mechanism (not shown in the figure) moves the optical pickup 5 in the radial direction of the optical disc in response to the slider servo signal. The read signal processing circuit 6 reproduces the information data stored in the optical disc 2 based on a read sample value obtained by sampling the read signal, and outputs this as reproduced information data. The read signal processing circuit 6 supplies the read sample value to the controller 1.

The memory 8 stores, in advance, optimum position information OP_{DVD} which shows an optimum position of the collimator lens 54 on the optical axis when the type of the optical disc 2 is a DVD, and optimum position information OP_{CD} which shows an optimum position of the collimator lens 54 on the optical axis when the type of the optical disc 2 is a CD. In the memory 8 there is provided a storage area for storing an amplitude value of a read sample value together with a current position of the collimator lens 54 when performing a spherical aberration correction subroutine (will be described).

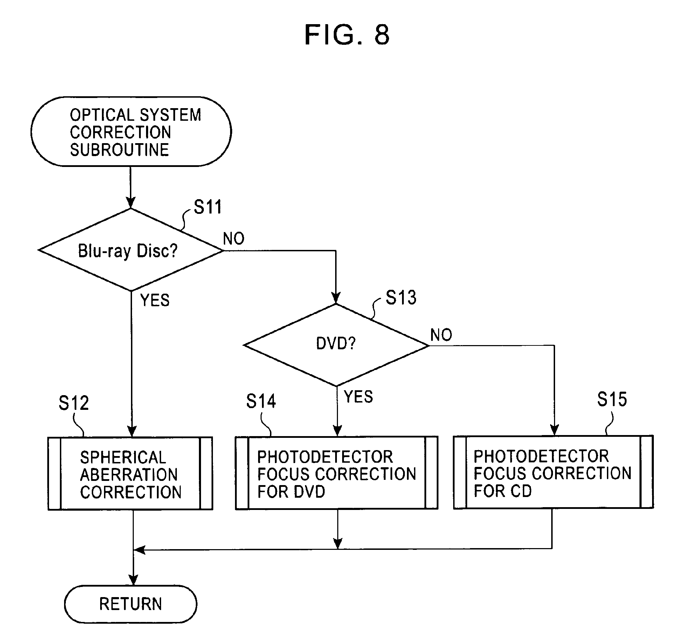

The controller 1 makes an adjustment to the optical pickup 5 according to an optical system correction subroutine as shown in Fig. 8 just before starting recordation/reproduction to/from the optical disc 2.

First, the controller 1 determines whether the optical disc 2 is a Blu-ray disc or not (step S11). When it is determined in the step S11 that the optical disc 2 is a Blu-ray disc, the controller 1 goes on to perform a spherical aberration correction subroutine (step S12).

In the spherical aberration correction subroutine, the controller 1 first supplies a lens replacement signal to the lens driver 7. The lens driver 7 supplies to the actuator 70 a drive voltage (or a drive current) for gradually moving the collimator lens 54 from a position A to a position B on the optical axis as shown in Fig. 7 in response to the lens replacement signal. The actuator 70 gradually moves the collimator lens 54 in the direction of the optical axis from the position A to the position B as shown in Fig. 7 in response to the drive voltage. While the collimator lens 54 is moving, the controller 1 repeatedly reads a read sample value from the read signal processing circuit 6, relates position information indicating the current position of the collimator lens 54 on the optical axis (a position between the position A and the position B) to an amplitude value of the read sampled value concerned, and sequentially stores the amplitude values and the position information in the memory 8. When the collimator lens 54 reaches the position B, the controller 1 retrieves the maximum value out of the amplitude values stored in the memory 8. Then, the controller 1 reads the stored position information together with the amplitude value from the memory 8, and supplies to the lens driver 7 a lens position set signal for setting the collimator lens 54 at the position indicated by the position information. This makes the actuator 70 move the collimator lens 54 to the position corresponding to the lens position set signal, and fix the collimator lens 54 at this position.

In other words, in the spherical aberration correction subroutine of the step S12, spherical aberration is corrected by moving the collimator lens 54 in the direction of the optical axis. The collimator lens 54 is used in both a go-route of the optical path of a light beam emitted by the first light source 51 and guided to the optical disc 2, and a return-route of the optical path of a light reflected from the optical disc 2 and guided to the photodetector 60. Therefore, even though the collimator lens 54 is moved in the direction of the optical axis for the sake of spherical aberration correction as described above, the beam spot of the reflected light from the optical disc 2 can correctly be formed on the light receiving surface of the photodetector 60.

On the other hand, when it is determined in the step S11 that the optical disc 2 is not a Blu-ray disc, the controller 1 goes on to determine whether or not this optical disc 2 is a DVD (step S13). When it is determined in the step S13 that the optical disc 2 is a DVD, the controller 1 goes on to perform a photodetector focus correction subroutine for a DVD (step S14).

In the photodetector focus correction subroutine for a DVD, the controller 1 first reads optimum position information OP_{DVD} from the memory 8, and supplies to the lens driver 7 a lens position set signal for setting the collimator lens 54 at the position on the optical axis indicated by the optimum position information OP_{DVD}. This makes the actuator 70 move the collimator lens 54 to the position corresponding to the lens position set signal, and fix the collimator lens 54 at this position.

In other words, when the optical disc 2 is a DVD, the collimator lens 54 is moved to the position on the optical axis indicated by the predetermined optimum position information OP_{DVD} so that the reflected light from the optical disc 2 in response to a light beam emitted by the second light source 52 can be correctly condensed on the light receiving surface of the photodetector 60.

On the other hand, when it is determined in the step S13 that the optical disc 2 is not a DVD, the controller 1 determines that this optical disc 2 is a CD, and goes on to perform a photodetector focus correction subroutine for a CD (step S15).

In the photodetector focus correction subroutine for a CD, the controller 1 first reads optimum position information OP_{CD} from the memory 8, and supplies to the lens driver 7 a lens position set signal for setting the collimator lens 54 at the position on the optical axis indicated by the optimum position information OP_{CD}. This makes the actuator 70 move the collimator lens 54 to the position corresponding to the lens position set signal, and fix the collimator lens 54 at this position.

In other words, when the optical disc 2 is a CD, the collimator lens 54 is moved to the position on the optical axis indicated by the optimum position information OP_{CD} so that the reflected light from the optical disc 2 in response to a light beam emitted by the third light source 66 can be correctly condensed on the light receiving surface of the photodetector 60.

After executing the step S12, S14, or S15, the controller 1 leaves the optical system correction subroutine (Fig.8), and goes on to control the recording or reproducing of information data (not shown).

As described above, in the information recording/reproducing apparatus shown in Fig. 7, an optical adjustment is made to the optical pickup 5 in accordance with the type of the optical disc 2 by moving the collimator lens 54 just before recording/reproducing information data. Specifically, when the optical disc 2 is a Blu-ray disc, spherical aberration correction is automatically made by moving the collimator lens 54. This eliminates the need for placing optical parts at respective precise positions determined in consideration of spherical aberration in assembling the optical pickup 5. On the other hand, when the optical disc 2 is a DVD or a CD, focus correction for correctly forming a beam spot of the reflected light from the optical disc 2 on the light receiving surface of the photodetector 60 is automatically made by moving the collimator lens 54. This eliminates the need for precisely positioning the second light source 52 or the third light source 66 in the direction of the optical axis in assembling the optical pickup 5, and makes the fabrication easier by just as much.

### Sixth Embodiment

In the above-described embodiments, the focus correction for the photodetector and spherical aberration correction are made by moving the collimator lens 54 or 64, or the expander lens 64 in the direction of the optical axis. However, a liquid crystal lens having a lens function whose focal length can be changed arbitrarily may be employed in place of the collimator lens or the expander lens which is movable in the direction of the optical axis.

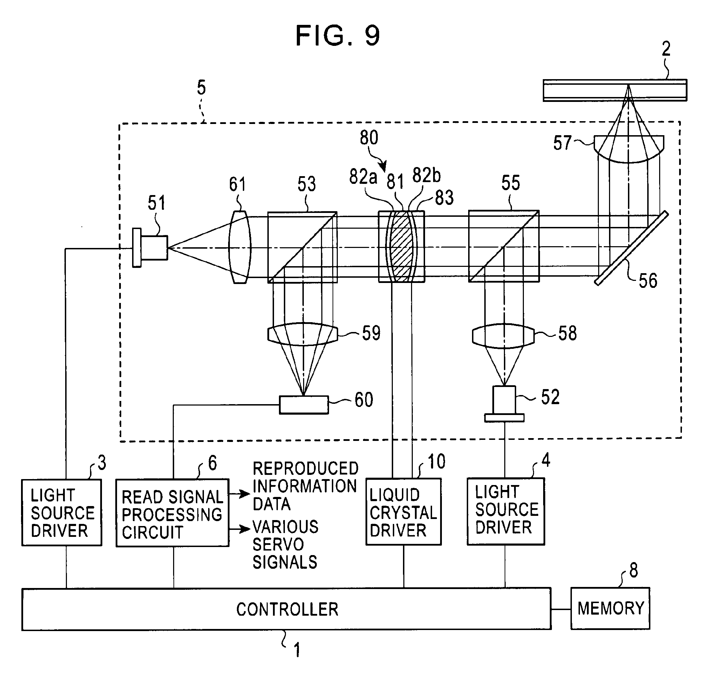

Fig. 9 illustrates an information recording/reproducing apparatus conceived in view of this point.

In Fig. 9, the configuration is the same as that shown in Fig. 6 except for a liquid crystal lens 80 adopted in place of the expander lens 62 and a liquid crystal driver 10 adopted in place of the lens driver 7.

In Fig. 9, the liquid crystal lens 80 is disposed on the optical axis between the beam splitters 53 and 55. The liquid crystal lens 80 includes a liquid crystal layer 81 which is filled with liquid crystal in the shape of a double-convex lens, a pair of transparent electrode plates 82a and 82b which contact the two convex surfaces of the liquid crystal layer 81 respectively, and a pair of glass substrates 83 having a refractive index n1 which sandwich the transparent electrode plates 82a and 82b.

The liquid crystal driver 10 applies a drive voltage between the transparent electrode plates 82a and 82b of the liquid crystal lens 80 in response to a refractive index set signal supplied from the controller 1. The liquid crystal layer 81 within the liquid crystal lens 80 has a refractive index n2 corresponding to the drive voltage applied between the transparent electrode plates 82a and 82b. In other words, the liquid crystal layer 81 is an optical element whose refractive index n2 changes in accordance with the refractive index set signal supplied from the controller 1. Therefore, when the refractive index n2 of the liquid crystal layer 81 is greater than the refractive index n1 of the glass substrate, the liquid crystal lens 80 functions as a positive lens (convex lens), and when the refractive index n2 is smaller than the refractive index n1, the liquid crystal lens 80 functions as a negative lens (concave lens). In short, the liquid crystal lens 80 functions as a positive lens or a negative lens which has a focal length corresponding to a drive voltage based on the refractive index set signal supplied from the controller 1. When the refractive index n2 is equal to the refractive index n1, the liquid crystal lens 80 functions as a parallel plate.

Thus, by making the liquid crystal lens 80 function as a positive lens or a negative lens in response to the drive voltage applied between the transparent electrode plates 82a and 82b, spherical aberration is corrected just as by moving the collimator lens 54 or 64, or the expander lens 64 in the direction of optical axis. Further, by changing the focal length of the liquid crystal lens 80 in response to the drive voltage applied between the transparent electrode plates 82a and 82b, focus is corrected just as by moving the collimator lens 54 or 64, or the expander lens 64 in the direction of optical axis.

## Claims

1. An optical pickup for recording/reading information data onto/from an optical recording medium comprising:
a photodetector for obtaining a read signal by applying photoelectric conversion to a light beam incident on a light receiving surface of the photodetector;
a first light source for generating a first light beam having a first wavelength;
a second light source for generating a second light beam which has a second wavelength different from the first wavelength of the first light beam;
a first optical path for directing the first light beam to the recording medium, condensing the reflected light from the recording medium, and guiding the reflected light to the light receiving surface of the photodetector;
a second optical path for guiding the second light beam to the recording medium; and
an optical system correction module provided on the first optical path for making spherical aberration correction when the first light beam is guided to the recording medium, and for making focus correction in condensing the reflected light from the recording medium on the light receiving surface of the photodetector when the second light beam is guided to the recording medium.

2. The optical pickup according to Claim 1, wherein the optical system correction module includes:
a movable lens provided on an optical axis of the first optical path which is movable in a direction of the optical axis; and
a controller for making the spherical aberration correction and the focus correction, wherein when the first light beam is guided to the recording medium, the controller detects spherical aberration while moving the movable lens in the direction of optical axis and makes the spherical aberration correction by setting the movable lens at a position on the optical axis where an amount of spherical aberration becomes minimum, whereas when the second light beam is guided to the recording medium, the controller makes the focus correction by moving the movable lens to a predetermined position on the optical axis.

3. The optical pickup according to Claim 1 or 2, wherein the optical system correction module makes the spherical aberration correction or the focus correction just before recording/reading the information data onto/from the recording medium.

4. The optical pickup according to Claim 2 or 3, wherein the movable lens is a collimator lens or an expander lens.

5. The optical pickup according to any one of Claims 1 to 4, wherein the optical system correction module includes:
a liquid crystal lens provided on the optical axis of the first optical path, the liquid crystal lens including a liquid crystal layer, two transparent electrode plates which contact opposite surfaces of the liquid crystal layer, and two glass substrates which sandwich the two transparent electrode plates; and
a controller for making the spherical aberration correction and the focus correction, the controller making the spherical aberration correction by causing the liquid crystal lens to function as a positive lens or a negative lens in response to a drive voltage applied to the transparent electrode plates, and the controller making the focus correction by changing a focal length of the liquid crystal lens in response to a drive voltage applied to the transparent electrode plates.

6. An optical pickup for recording/reading information data onto/from an optical recording medium comprising:
a photodetector for obtaining a read signal by applying photoelectric conversion to a light incident on a light receiving surface of the photodetector;
a first light source for generating a first light beam having a first wavelength;
a second light source for generating a second light beam which has a second wavelength different from the first wavelength;
a third light source for generating a third light beam which has a third wavelength different from the first and second wavelengths;
a first optical path for directing the first light beam to the recording medium, condensing the reflected light from the recording medium, and guiding the reflected light to the light receiving surface of the photodetector;
a second optical path for guiding the second light beam to the recording medium;
a third optical path for guiding the third light beam to the recording medium; and
an optical system correction module provided in the first optical path for making spherical aberration correction when the first light beam is guided to the recording medium, and for making focus correction in condensing the reflected light from the recording medium on the light receiving surface of the photodetector when the second or third light beam is guided to the recording medium.

7. The optical pickup according to Claim 6, wherein the optical correction module includes:
a movable lens provided on an optical axis of the first optical path and movable in a direction of the optical axis; and
a controller for making the spherical aberration correction and the focus correction, wherein when the first light beam is guided to the recording medium, the controller detects an amplitude of the read signal while moving the movable lens in the direction of optical axis and makes the spherical aberration correction by setting the movable lens at a position on the optical axis where the amplitude is at the minimum, when the second light beam is guided to the recording medium, the controller makes the focus correction by moving the movable lens to a predetermined first position on the optical axis, and when the third light beam is guided to the recording medium, the controller makes the focus correction by moving the movable lens to a predetermined second position on the optical axis.

8. The optical pickup according to Claim 6 or 7, wherein the optical system correction module makes the spherical aberration correction or the focus correction just before recording/reading the information data onto/from the recording medium.

9. The optical pickup according to Claim 7 or 8, wherein the movable lens is a collimator lens or an expander lens.

10. The optical pickup according to any one of Claims 6 to 9, wherein the optical system correction module includes:
a liquid crystal lens provided on the optical axis of the first optical path, and including a liquid crystal layer, two transparent electrode plates which contact opposite surfaces of the liquid crystal layer respectively, and two glass substrates which sandwich the two transparent electrode plates; and
a controller for making the spherical aberration correction and the focus correction, the controller making the spherical aberration correction by causing the liquid crystal lens to function as a positive lens or a negative lens in accordance with a drive voltage applied to the transparent electrode plates, the controller making the focus correction by changing a focal length of the liquid crystal lens in accordance with a drive voltage applied to the transparent electrode plates.

11. An information recording/reproducing apparatus for recording/reproducing information data onto/from an optical recording medium comprising:
an optical pickup including:
a photodetector for obtaining a read signal by applying photoelectric conversion to a light beam incident on a light receiving surface of the photodetector;
a first light source for generating a first light beam having a first wavelength;
a second light source for generating a second light beam which has a second wavelength different from the first wavelength;
a first optical path for directing the first light beam to the recording medium, condensing the reflected light from the recording medium, and guiding the reflected light to the light receiving surface of the photodetector;
a second optical path for guiding the second light beam to the recording medium; and
an optical system correction module provided on the first optical path for making spherical aberration correction when the first light beam is guided to the recording medium, and for making focus correction in condensing the reflected light from the recording medium on the light receiving surface of the photodetector when the second light beam is guided to the recording medium.

12. The information recording/reproducing apparatus according to Claim 11, wherein the optical system correction module includes:
a movable lens provided on an optical axis of the first optical path which is movable in a direction of the optical axis; and
a controller for making the spherical aberration correction and the focus correction, wherein when the first light beam is guided to the recording medium, the controller detects spherical aberration while moving the movable lens in the direction of optical axis and makes the spherical aberration correction by setting the movable lens at a position on the optical axis where an amount of spherical aberration becomes minimum, whereas when the second light beam is guided to the recording medium, the controller makes the focus correction by moving the movable lens to a predetermined position on the optical axis.

13. The information recording/reproducing apparatus according to Claim 11 or 12, wherein the optical system correction module makes the spherical aberration correction or the focus correction just before recording/reading the information data onto/from the recording medium.

14. The information recording/reproducing apparatus according to Claim 12 or 13, wherein the movable lens is a collimator lens or an expander lens.

15. An information recording/reproducing apparatus for recording/reproducing information data onto/from an optical recording medium comprising:
an optical pickup including:
a photodetector for obtaining a read signal by applying photoelectric conversion to a light beam incident on a light receiving surface of the photodetector;
a first light source for generating a first light beam having a first wavelength;
a second light source for generating a second light beam which has a second wavelength different from the first wavelength;
a third light source for generating a third light beam which has a third wavelength different from the first and second wavelengths;
a first optical path for guiding the first light beam to the recording medium, condensing the reflected light from the recording medium, and guiding the reflected light to the light receiving surface of the photodetector;
a second optical path for guiding the second light beam to the recording medium;
a third optical path for guiding the third light beam to the recording medium; and
an optical system correction module provided in the first optical path for making spherical aberration correction when the first light beam is guided to the recording medium, and for making focus correction in condensing the reflected light from the recording medium on the light receiving surface of the photodetector when the second or third light beam is guided to the recording medium.

16. The information recording/reproducing apparatus according to Claim 15, wherein the optical correction module includes:
a movable lens provided on an optical axis of the first optical path and movable in a direction of the optical axis; and
a controller for making the spherical aberration correction and the focus correction, wherein when the first light beam is guided to the recording medium, the controller detects an amplitude of the read signal while moving the movable lens in the direction of optical axis and makes the spherical aberration correction by setting the movable lens at a position on the optical axis where the amplitude is minimum, when the second light beam is guided to the recording medium, the controller makes the focus correction by moving the movable lens to a predetermined first position on the optical axis, and when the third light beam is guided to the recording medium, the controller makes the focus correction by moving the movable lens to a predetermined second position on the optical axis.

17. The information recording/reproducing apparatus according to Claim 15 or 16, wherein the optical system correction module makes the spherical aberration correction or the focus correction just before recording/reading the information data onto/from the recording medium.

18. The information recording/reproducing apparatus according to Claim 16 or 17, wherein the movable lens is a collimator lens or an expander lens.
